# EUROPÄISCHE PATENTSCHRIFT

(11) **EP 3 743 390 B1**
(45) Veröffentlichungstag und Bekanntmachung des Hinweises auf die Patenterteilung: **30.08.2023**
(21) Anmeldenummer: 19703025.7
(22) Anmeldetag: 24.01.2019
(51) Int. Cl.: C03B 23/11

(54) **HEISSFORMGEBUNGSVORRICHTUNG ZUR HERSTELLUNG VON GLASBEHÄLTNISSEN AUS EINEM GLASROHR**
HOT-FORMING DEVICE FOR PRODUCING GLASS CONTAINERS FROM A GLASS TUBE
DISPOSITIF DE FAÇONNAGE À CHAUD POUR LA FABRICATION DE RÉCIPIENTS EN VERRE À PARTIR D'UN TUBE DE VERRE

(30) Priorität: 26.01.2018 DE 102018101842
(43) Veröffentlichungstag der Anmeldung: 02.12.2020
(73) Patentinhaber: SCHOTT Pharma Schweiz AG, 9000 St. Gallen (CH)
(72) Erfinder: TREMP, Marcel, 9042 Speicher (CH); SEGNER, Johannes, 34117 Kassel (DE)
(74) Vertreter: Ullrich & Naumann PartG mbB
(86) Internationale Anmeldenummer: PCT/EP2019/051802
(87) Internationale Veröffentlichungsnummer: WO 2019/145449

(56) Entgegenhaltungen:
- DATABASE WPI Week 201450 4. Juni 2014 (2014-06-04) Thomson Scientific, London, GB; AN 2014-P14678 XP002790789, & CN 103 839 765 A (LI J) 4. Juni 2014 (2014-06-04) & CN 103 839 765 A (LI JIALING) 4. Juni 2014 (2014-06-04)
- DATABASE WPI Week 199950 21. September 1999 (1999-09-21) Thomson Scientific, London, GB; AN 1999-585726 XP002790790, & JP H11 255524 A (HOYA CORP) 21. September 1999 (1999-09-21) & JP H11 255524 A (HOYA CORP) 21. September 1999 (1999-09-21)
- DATABASE WPI Week 201640 27. Januar 2016 (2016-01-27) Thomson Scientific, London, GB; AN 2016-087891 XP002790791, & CN 105 271 658 A (CHANGSHA ZHIYUAN TECHNOLOGY CO LTD) 27. Januar 2016 (2016-01-27) & CN 105 271 658 A (CHANGSHA ZHIYUAN TECHNOLOGY CO LTD) 27. Januar 2016 (2016-01-27)

## Beschreibung

### Gebiet der Erfindung

Die vorliegende Erfindung betrifft allgemein eine Vorrichtung zur Herstellung von Glasbehältnissen und betrifft insbesondere eine Heißformgebungsvorrichtung zur Herstellung von Glasbehältnissen aus einem Glasrohr, insbesondere zur Verwendung als Primär-Packmittel für pharmazeutische Wirkstoffe, beispielsweise als Glasfläschchen (Vials), Karpulen oder Spritzenkörper.

### Hintergrund der Erfindung

Eine solche Heißformgebungsvorrichtung ist aus der DE 103 41 300 B3 bekannt und dient, wie auch die Heißformgebungsvorrichtung gemäß der vorliegenden Erfindung, zur Herstellung von Glasbehältnissen aus einem Glasrohr, insbesondere zur Verwendung als Primär-Packmittel für pharmazeutische Wirkstoffe, beispielsweise als Glasfläschchen (Vials), Karpulen oder Spritzenkörper.

Eine solche vertikal ausgerichtete Heißformgebungsvorrichtung weist typischerweise wenigstens zwei Drehtische auf, die jeweils schrittweise um einen zugeordneten Drehturm gedreht werden, um eine Serie von Bearbeitungsstationen bis zur Bearbeitung und Heissformgebung zu durchlaufen. Über den Umfang der Drehtische sind jeweils mehrere Haltefutter zum Halten von Werkstücken, also von Glasrohrabschnitten, verteilt angeordnet. Auf der Arbeitsplatte der Heißformgebungsvorrichtung sind Werkzeuge und eine Mehrzahl von Gasbrennern zur Umformung montiert. Im Arbeitsmodus schwenken die Drehtürme von Arbeitsposition zu Arbeitsposition und sind bei der Übergabe vom Haupt- zum Nebenturm zur Produktübergabe synchronisiert.

Vergleichbare Heißformgebungsvorrichtungen der vorgenannten Art sind in DE 20 2004 004 560 U1, WO 2005/092805 A1 und EP 2 818 454 A1 offenbart.

Nach der EP 2 818 454 A1 soll bei der Herstellung von Glasbehältern durch Heißumformung die sog. Delaminationsneigung, also die Anreicherung von Bor und anderen Elementen bzw. Verbindungen im Inneren der Glasbehälter, verringert werden. Hierzu wird ein Gas in den noch heißen Hohlraum eines Glasbehälters während der Heißformgebung eingeblasen. Zum Zuführen des Gases zu den Haltefuttern für die Glasbehälter sind in dem Drehtisch der Vorrichtung Druckluftkanäle ausgebildet. Zum Überführen des Gases in das Kanalsystem des Drehtisches ist eine Spaltdichtung vorgesehen, die jedoch den Spalt nicht perfekt abdichten kann, was für Druckluft akzeptabel ist. Die Druckluft zum Ausblasen von Gasen aus den Glasbehältern während deren Heißformgebung hat keinen oder allenfalls einen vernachlässigbaren Kühleffekt auf den Drehtisch.

Die zur Heissumformung üblicherweise verwendeten Gasbrenner führen zu einem erheblichen Wärmeeintrag in die Anlage. Um Glasbehältnisse unter Einhaltung sehr enger Toleranzen und mit gleichbleibenden Eigenschaften herstellen zu können, müssen die Aufnahmen der zu bearbeitenden Werkstücke sehr präzise relativ zu den bearbeitenden Werkzeugen oder Elementen der Heißformgebungsvorrichtung angeordnet sein. Dies erfordert einen Betrieb der Heißformgebungsvorrichtung in einem thermischen Gleichgewicht, wobei die bearbeitenden Werkzeuge oder Elemente der Heißformgebungseinrichtung dann nur im dauerhaften Betriebszustand präzise zu den Aufnahmen der Werkstücke ausgerichtet sind bzw. ausgerichtet werden können. Bereits relativ geringe Temperaturschwankungen können in einer erheblichen Schwankung von Abmessungen in der Heißformgebungsvorrichtung, beispielsweise des Durchmessers eines Drehtisches, und somit der Produktqualität resultieren. Bei den derzeit verwendeten Heißformgebungsvorrichtungen erfordert dies, dass die Anlage nach einem Hochfahren solange nicht zur Herstellung von Glasbehältnissen genutzt werden kann, solange das thermische Gleichgewicht noch nicht erreicht ist. Dieser ungenutzte Zeitraum kann durchaus von der Größenordnung von einer halben Stunde bis zu mehreren Stunden betragen. Die eigentliche Produktion kann erst nach Erreichen eines thermischen Gleichgewichts beginnen, was die Produktionsausbeute limitiert.

Ähnliche Probleme bestehen, wenn die Prozessparameter der Anlage verändert werden, beispielsweise wenn die Herstellungsbedingungen von der Fertigung eines Typs von Glasbehältnis zur Fertigung eines anderen Typs von Glasbehältnis mit anderen Prozessparametern geändert werden sollen, oder wenn der laufende Betrieb einer Anlage zu Wartungs- oder Reparaturzwecken, insbesondere zum Entfernen von Glasbruch in der Anlage, unterbrochen werden muss.

In der WO 2005/092805 A1 wird zum Beispiel vorgeschlagen, die abweichende Position des Glasrohrs bzw. des Container-Vorproduktes von der Sollposition, an welcher das Bearbeitungswerkzeug positioniert ist, zu kompensieren, indem die Bearbeitungswerkzeuge in der Tischebene auf einem Kreuztisch verfahrbar angeordnet sind.

WO 2004/057647 A1 offenbart eine Vorrichtung zur Herstellung von Glaskolben durch Blasformen an beiden Enden eines Glasrohrs. Die Blasformung erfolgt in Haltefuttern, die an einem drehbeweglich gelagerten Drehtisch befestigt sind. In jedem Haltefutter ist ein Kühlmittelkanal ausgebildet, der von einem Kühlmittel zur Kühlung durchströmt ist, um die Drehlager bzw. das Schmiermittel in den Drehlagern der Haltefutter vor einer Überhitzung zu schützen. Das Kühlmittel wird von einem Kühlmittelbehälter zugeführt, der am oberen Endes des Drehtisches befestigt ist und sich gemeinsam mit dem Drehtisch dreht. Dieser Aufbau zur Kühlung ist vergleichsweise aufwändig.

CN103839765 A offenbart eine Heissformgebungsvorrichtung zur Herstellung von Hohlglas aus einem Rohr mit Hilfe eines Drehtischs. Unter dem Drehtisch befinden sich gekühlte Bauteile.

JPH11255524 A lehrt eine Vorrichtung zur Herstellung flacher Glaskörper, wobei eine Glasschmelze in eine Form gegossen und dann gepresst wird. Ein hierzu genutzter Drehtisch wird gekühlt. CN105271658 A lehrt in die Herstellung von Glasflaschen mit Hilfe eines Drehtischs, wobei die Achse des Drehtischs von innen gekühlt wird.

Im Hinblick auf die weiter steigenden Anforderungen an die Produktqualität von Glasbehältnissen zur Verwendung als Primär-Packmittel für pharmazeutische Wirkstoffe besteht somit weiterer Verbesserungsbedarf.

### Zusammenfassung der Erfindung

Es ist eine Aufgabe der vorliegenden Erfindung, eine verbesserte Heißformgebungsvorrichtung zur Herstellung von Glasbehältnissen aus Glasrohren bereitzustellen, womit sich Glasbehältnisse mit gleichbleibend hoher Qualität auch mit sehr hohen Taktraten zuverlässig und effizient herstellen lassen.

Diese Aufgabe wird durch eine Heißformgebungsvorrichtung zur Herstellung von Glasbehältnissen aus Glasrohren nach Anspruch 1 gelöst. Weitere vorteilhafte Ausführungsformen sind Gegenstand der rückbezogenen Unteransprüche.

Gemäß der vorliegenden Erfindung wird eine Heißformgebungsvorrichtung zur Herstellung von Glasbehältnissen aus einem Glasrohr bereitgestellt, mit einem drehbeweglich gelagerten Drehtisch und einem zugeordneten Antriebsmotor zum Antreiben des Drehtisches, wobei über den Umfang des Drehtisches mehrere Haltefutter zum Halten von Werkstücken verteilt angeordnet sind.

Erfindungsgemäß ist in dem Drehtisch ein Kühlmittelkanal ausgebildet, der flüssigkeitsdicht ist und der zum Kühlen des Drehtisches von einem Kühlmittel durchströmbar ist. Zur Kühlung können gemäß der vorliegenden Erfindung wahlweise Gase oder Kühlflüssigkeiten eingesetzt werden, sodass der vergleichsweise hohen thermischen Masse des Drehtisches effektiv Wärme entzogen werden kann. Weil an dem Drehtisch die zu bearbeitenden Werkstücke (Glasrohr bzw. halbfertiges Zwischenprodukt, das mittels Heissumformung weiter verarbeitet werden muss) gehalten sind, wirken sich Temperaturschwankungen in diesem Bereich in erheblichen Maße auf die Abstände und Ausrichtung zu den bearbeitenden Werkzeugen oder Elementen der Heißformgebungsvorrichtung aus, und somit auf die Präzision bei der Weiterverarbeitung einschließlich einer Heissumformung der Glasrohre. Aufgrund der Kühlung, die erfindungsgemäß gezielt in diesem Bereich erfolgt, bevorzugt mittels einer Kühlflüssigkeit, kann ein thermisch stabiler Betrieb der Heißformgebungsvorrichtung bereits kurze Zeit nach einem Hochfahren oder vorübergehenden Stillstand der Heißformgebungsvorrichtung erzielt werden und wirken sich auch Änderungen der Prozessparameter nicht weiter auf Eigenschaften der Heißformgebungsvorrichtung aus, welche die Qualität der herzustellenden Glasbehältnisse beeinflussen. Somit kann erfindungsgemäß die Produktionsausbeute und Betriebslaufzeit deutlich gesteigert werden.

Durch geeignete Ausbildung des Kühlmittelkanals kann dieser auch an unterschiedliche Geometrien und thermische Verhältnisse des Drehtisches in einfacher Weise individuell angepasst werden. Hierzu ist auf eine flüssigkeitsdichte Ausbildung der Kühlmittelkanäle und deren geeignet flüssigkeitsdichte Verbindung mit Zuläufen und Abläufen für das verwendete Kühlmittel zu achten. Der Drehtisch kann insbesondere einen plattenförmigen Halteteller bzw. Drehkranz umfassen, an dessen Umfangsrand mehrere Haltefutter zum Halten der zu bearbeitenden Werkstücke befestigt und verteilt angeordnet sind, wobei der plattenförmige Halteteller bzw. Drehkranz erfindungsgemäß von Kühlmittel durchströmt werden kann, um gezielt in diesem Bereich für stabile thermische Bedingungen zu sorgen.

Gemäß einer weiteren Ausführungsform ist der Kühlmittelkanal zumindest abschnittsweise mit mäanderförmigem Verlauf ausgebildet, so dass das Kühlmittel den Kühlmittelkanal mäanderförmig durchströmt. Auf diese Weise kann in vorteilhaft einfacher Weise die Kühlwirkung durch das Kühlmittel großflächig auf den Drehtisch vergleichmäßigt werden. Gleichzeitig kann dadurch auch die für eine angemessene Kühlung erforderliche Kühlmittelmenge reduziert werden. Der mäanderförmige Verlauf dient weiter dazu, eine möglichst große Kontaktoberfläche zwischen Kühlmittel und Drehtisch zu erhalten und somit die zu entziehende Wärmemenge zu erhöhen. Die vorgenannte Vergleichmässigung erfolgt insbesondere durch Wärmeleitung im Bauteil selber, insbesondere in Abschnitten zwischen benachbarten Teilabschnitten des Kühlmittelkanals mit entgegengesetzter Strömungsrichtung des durchströmenden Kühlmittels.

Dabei können sich die Mäander des Kühlmittelkanals gemäß einer weiteren Ausführungsform radial bis zwischen die Haltefutter erstrecken, um gezielt auch Bereiche in unmittelbarer Nähe der Haltefutter zu kühlen. Weil die Haltefutter die erwärmten Glasrohre halten, auf die Gasbrenner zur Erwärmung gerichtet sind, ist der Wärmeeintrag gerade in diesen Bereichen vergleichsweise groß.

Gemäß einer weiteren Ausführungsform sind entlang des Umfangs des Drehtisches mehrere Teilabschnitte mit Kühlmittelkanälen ausgebildet, bevorzugt zwei bis acht Teilabschnitte, welche mit einem gemeinsamen Zulauf-Verteilerkanal und einem gemeinsamen Ablauf-Verteilerkanal flüssigkeitsdicht verbunden und parallelgeschaltet sind. Durch die Parallelschaltung dieser Teilabschnitte wird eine weitere Vergleichmäßigung der thermischen Verhältnisse auch in Umfangsrichtung des Drehtisches gesorgt.

Gemäß einer weiteren Ausführungsform können die Verteilerkanäle für das Kühlmittel als umfängliche Kanäle in einem gemeinsamen Hauptkörper ausgeführt sein, die über eine Trennwand voneinander getrennt sind. Dabei kann ein innerer Verteilerkanal mit einem kleineren Durchmesser und ein äußerer Verteilerkanal mit einem größeren Durchmesser vorgesehen sein, wobei der innere Verteilerkanal tiefer, in Achsrichtung des Hauptkörpers betrachtet, in den Hauptkörper eingearbeitet ist als der äußere Verteilerkanal. Dabei können Anschlüsse zur Versorgung der Kühlmittelkanäle der Teilabschnitte mit Kühlmittel über radiale Bohrungen mit den Verteilerkanälen flüssigkeitsdicht verbunden sein, wobei die radialen Bohrungen in Achsrichtung des Hauptkörpers versetzt sind. Auf diese Weise können die vorgenannten Teilabschnitte in einfacher Weise von gemeinsamen Kühlmittel-Verteilerkanälen mit Kühlmittel versorgt werden, insbesondere mit einer Kühlflüssigkeit.

Gemäß einer weiteren Ausführungsform ist der zumindest abschnittsweise mäanderförmig ausgebildete Kühlmittelkanal in einem vertikalen Abschnitt des Drehtisches vorgesehen. So können beispielsweise gezielt Abschnitte des Drehtisches gekühlt werden, in denen Lager oder Teile eines Antriebsmotors angeordnet sind, die empfindlich auf Temperaturschwankungen reagieren.

Gemäß einer weiteren Ausführungsform ist der zumindest abschnittsweise mäanderförmig ausgebildete Kühlmittelkanal ergänzend oder alternativ in einem horizontalen Abschnitt des Drehtisches vorgesehen ist. Auf diese Weise können insbesondere die Bereiche der Haltefutter zum Halten von Werkstücken, die üblicherweise an dem horizontalen Abschnitt des Drehtisches vorgesehen sind, gezielt gekühlt werden, sodass aufgrund einer Reduzierung von Temperaturschwankungen eine noch höhere Lagegenauigkeit der Haltefutter erzielt werden kann. Hierzu kann der zumindest abschnittsweise mäanderförmig ausgebildete Kühlmittelkanal in dem horizontalen Abschnitt des Drehtisches jeweils in Bereichen zwischen zwei benachbarten Haltefuttern vorgesehen sein.

Gemäß einer weiteren Ausführungsform ist der Drehtisch an einem Träger drehbeweglich gelagert, der feststehend auf einem Arbeitstisch der Heißformgebungsvorrichtung angeordnet ist und sich senkrecht zu diesem erstreckt, wobei oberhalb des Drehtisches an dem Träger ein Kühlmittel-Verteiler bzw. Drehverteiler vorgesehen ist, der eine ortsfeste Versorgungs- und Abführungsleitung zur Versorgung und Abführung des Kühlmittels über Verbindungsleitungen mit dem drehbeweglich gelagerten Drehtisch flüssigkeitsdicht verbindet. Während herkömmlich der Träger als Drehsäule rotierend auf einem Arbeitstisch der Heißformgebungsvorrichtung angeordnet war, kann die Kühlmittelversorgung durch Anordnung eines drehfesten Trägers, insbesondere einer drehfesten Säule, auf dem Arbeitstisch vorteilhaft vereinfacht werden. Insbesondere braucht ein Kühlmittelreservoir, das üblicherweise relativ groß und schwer ist, nicht am oberen Ende des Drehtisches angeordnet zu sein. Vielmehr genügt zur Versorgung mit Kühlmittel erfindungsgemäß die flüssigkeitsdichte Kopplung einer stationären Versorgungs- und Abführungsleitung mit Versorgungsschläuchen, die sich mit dem Drehtisch mitdrehen.

Gemäß einer weiteren Ausführungsform ist der vorgenannte Träger als Säule mit einem kreisrunden Querschnitt ausgebildet, die sich senkrecht zu dem Arbeitstisch erstreckt. Eine solche Säule ist noch besser an die Geometrie des zugeordneten Drehtischs angepasst, sodass insbesondere Abstände zwischen der Säule und dem Drehtisch bzw. den daran vorgesehenen Haltefuttern noch weiter verringert werden können, was die Steifigkeit des gesamten Aufbaus vorteilhaft erhöht und so eine noch höhere Präzision bei der Herstellung von Glasbehältern ermöglicht.

Gemäß einer weiteren Ausführungsform weist der Drehtisch einen oberen Kühlmittelkanal, der in einem oberen Bereich des Drehtisches verläuft, und einen unteren Kühlmittelkanal auf, der in einem unteren Bereich des Drehtisches verläuft. Mittels der Konfiguration dieser Kühlmittelkanäle kann gezielt den ggf. auch unterschiedlichen thermischen Verhältnissen des Drehtisches Rechnung getragen werden. So können die Kühlmittelkanäle beispielsweise so ausgebildet sein, dass die Kühlwirkung im unteren Bereich, in dem typischerweise der Wärmeeintrag größer ist, größer ist als im oberen Bereich des Drehtisches. Allgemein ermöglicht die Unterteilung des Drehtisches in mehrere Teilabschnitte mit Kühlmittelkanälen die Bildung von mehreren Kühlzonen sodass die Kühlleistung individuell an die unterschiedlichen thermischen Verhältnissen in den Kühlzonen angepasst werden kann, indem beispielsweise die Kühlfläche (Gestaltung Kanäle), die Durchflussmenge des Kühlmittels oder die Vorlauftemperatur verändert werden.

Gemäß einer weiteren Ausführungsform sind entlang des Umfangs des Drehtisches mehrere Teilabschnitte mit oberen Kühlmittelkanälen, die in einem oberen Bereich des Drehtisches verlaufen, und mit unteren Kühlmittelkanälen ausgebildet sind, die in einem unteren Bereich des Drehtisches verlaufen, bevorzugt zwei bis acht Teilabschnitte. Einlässe und Auslässe dieser Teilabschnitte sind zur Versorgung der unteren Kühlmittelkanäle und der oberen Kühlmittelkanäle über Verbindungsleitungen bevorzugt so flüssigkeitsdicht miteinander verbunden, dass in Umfangsrichtung des Drehtisches die mehreren Teilabschnitte mit Kühlmittelkanälen ausgebildet sind, wobei die Teilabschnitte über die Verbindungsleitungen parallel geschaltet sind. Auf diese Weise kann eine weitere Vergleichmäßigung der thermischen Verhältnisse auch in Umfangsrichtung des Drehtisches in einfacher Weise gewährleistet werden.

Gemäß einer weiteren Ausführungsform ist der Drehtisch zweiteilig oder mehrteilig ausgebildet, mit einem ersten Hauptkörper, der insbesondere einen oberen (oder auch unteren) Bereich des Drehtisches ausbildet, und mit einem zweiten Hauptkörper, der insbesondere einen unteren (oder auch oberen) Bereich des Drehtisches ausbildet, wobei die beiden Hauptkörper drehstarr miteinander verbunden sind. Dadurch kann beispielsweise eine funktionale Trennung zwischen den beiden Hauptkörpern erzielt werden. So kann beispielsweise in dem unteren (oder oberen) Bereich bzw. unteren (oder oberen) Hauptkörper des Drehtisches ein Antriebsmotor so aufgenommen sein, dass dieser aufgrund einer Kühlung in einer stabilen thermischen Umgebung angeordnet ist. Oder durch gezielte Kühlung des unteren (oder oberen) Bereichs kann der Wärmeeintrag in diesem Bereich ausgeglichen und in diesem Bereich für stabile thermische Verhältnisse gesorgt werden. So können noch stabilere thermische Verhältnisse im Bereich des Drehtisches selbst bei hohen Taktraten des Drehtisches und damit einhergehend bei hohem Wärmeeintrag aufgrund von Gasbrennern erzielt werden.

Gemäß einer weiteren Ausführungsform ist der Antriebsmotor als Direktantrieb ausgebildet, sodass der jeweilige Drehtisch mit der zugeordneten Säule direkt und ohne Zwischenschaltung eines Getriebes verbunden ist. Zur Minimierung eines Spiels ist der Direktantrieb dabei möglichst nahe zur eigentlichen Bearbeitungsebene angeordnet, in der das Glasrohr bzw. halbfertige Zwischenprodukt während seiner Bearbeitung und Heissformgebung positioniert ist. Ganz besonders bevorzugt ist der Direktantrieb dabei oberhalb einer Arbeitsplatte angeordnet, auf der die jeweiligen Träger bzw. Säulen angeordnet sind, weil so der Abstand zwischen dem Direktantrieb bzw. der dem Direktantrieb zugeordneten Drehlagerung und der eigentlichen Bearbeitungsebene minimiert werden kann, was in einem reduzierten Spiel, geringeren Verschleiß und somit in einer höheren Bearbeitungsgenauigkeit resultiert. Aufgrund der so bewirkten effizienten Ableitung von Abwärme hat auch ein hoher Wärmeeintrag, der mit sehr hohen Taktraten der Heißformgebungsvorrichtung einher geht, keinen nachteiligen Einfluss auf die thermischen Verhältnisse im Bereich des Drehtisches.

Gemäß einer weiteren Ausführungsform umfasst der jeweilige Direktantrieb einen Torquemotor mit einer hohen Polpaaranzahl, beispielsweise mit zumindest zweiundzwanzig Polpaaren. Ein Torquemotor kann vereinfacht als ein auf hohe Drehmomente optimierter, großer Servomotor mit Hohlwelle betrachtet werden. Torquemotoren sind üblicherweise bürstenlose Gleichstrommotoren, teilweise werden aber auch geschaltete Reluktanzmotoren als Torquemotor bezeichnet. Mit anderen Worten ist ein Torquemotor im Sinne der vorliegenden Erfindung ein umgangssprachlich häufig auch als langsam laufender oder momentenstarker bezeichneter Antrieb. Torquemotoren im Sinne der vorliegenden Erfindung können als Außenläufer (Stator innen, Rotor ("Läufer") außen) oder als herkömmliche Innenläufer (Rotor innen, Stator außen) ausgebildet sein. Außenläufer können dabei bei gleicher Baugröße ein größeres Drehmoment zur Verfügung stellen.

Ein Torquemotor zeichnet sich insbesondere durch ein gesteigertes Drehmoment aus, das vor allem aus der relativ hohen Polpaarzahl und den daraus resultierenden kurzen Wegen für den magnetischen Rückschluss resultiert, woraus geringe Leiterverluste und ein tiefes Verhältnis von Masse zu Drehmoment resultieren. Außerdem können Torquemotoren in einfacher Weise mit einem relativ großen Durchmesser hergestellt werden. Das große Antriebsmoment von Torquemotoren ermöglicht dabei große Beschleunigungen und eine hohe Dynamik des Systems. Torquemotoren haben eine höhere Antriebssteifigkeit als Motor-Getriebe-Einheiten gemäß dem Stand der Technik und kein Verdrehspiel. Sie ermöglichen insbesondere auch bessere Regeleigenschaften durch verringerte Störgrößen und eine erhöhte Wiederholgenauigkeit. Torquemotoren sind durch den Wegfall mechanischer Elemente geräusch- und wartungsarm. In einem Torquemotor kommt es praktisch zu keinem Verschleiß.

Gemäß einer weiteren Ausführungsform ist ein Stator des jeweiligen Torquemotors im oberen Bereich des zugeordneten Trägers, insbesondere der zugeordneten Säule, angeordnet. Somit kann der Abstand zwischen dem Torquemotor und dem eigentlichen Bearbeitungsbereich vorteilhaft reduziert werden, was eine höhere Bearbeitungsgenauigkeit ermöglicht.

Gemäß einer weiteren Ausführungsform ist der zugeordnete Träger, insbesondere die zugeordnete Säule, feststehend bzw. drehstarr auf einem Arbeitstisch bzw. oberhalb von diesem angeordnet. Der Aufbau kann somit ausreichend dynamisch steif ausgelegt werden, um die beim Schwenken des Drehtisches vorherrschenden Antriebskräfte aufnehmen zu können.

Gemäß einer weiteren Ausführungsform ist das Drehlager in dem vorgenannten gekühlten Bereich und unter einem geringen Abstand zu einer Arbeitsebene zwischen Glasrohr bzw. einem halbfertigen Zwischenprodukt nach Abtrennung von dem Glasrohr und einem Bearbeitungswerkzeug angeordnet. Aufgrund der Kühlung kann für gleichmäßige thermische Verhältnisse auch im Bereich des Drehlagers gesorgt werden.

Gemäß einer weiteren Ausführungsform ist weiterhin zumindest ein Temperatursensor zum Erfassen einer Temperatur des Drehtisches oder des den Drehtisch durchströmenden Kühlmittels vorgesehen, wobei eine zugeordnete Regelschaltung ausgelegt ist, um die Temperatur des Drehtisches konstant zu halten oder einen Volumenstrom des den Drehtisch durchströmenden Kühlmittels durch Verstellen eines Stellglieds geeignet zu regeln. Beispielsweise kann das Stellglied den Volumenstrom des Kühlmittels geeignet variieren, beispielsweise durch Verändern eines Strömungsquerschnitts. Hierzu können insbesondere geeignete Stellventile eingesetzt werden.

Gemäß einer bevorzugten weiteren Ausführungsform ist die vorgenannte Kühlung ausschließlich im Bereich des Drehtisches einer sog. Muttermaschine vorgesehen, wie nachfolgend näher ausgeführt. Grundsätzlich kann die vorgenannte Kühlung jedoch auch im Bereich des Drehtisches einer sog. Bodenmaschine, die zur Formung der Böden der Glasbehältnisse verwendet wird, vorgesehen sein, wie nachfolgend näher ausgeführt.

Allgemein kann das vorstehend beschriebene Kühlkonzept bei beliebigen Rundläufermaschinen zur Herstellung von Glasbehältnissen aus Glasrohren durch Heissumformung eingesetzt werden. Rundläufermaschinen im Sine der vorliegenden Erfindung können grundsätzlich nur einen einzigen Drehtisch aufweisen, können aber auch zwei Drehtische oder mehr als zwei Drehtische aufweisen.

Gemäß einer weiteren Ausführungsform weist die Heißformgebungsvorrichtung zwei Drehtische auf, wobei die Drehtische schrittweise Drehbewegungen um die zugeordneten Säulen mit einer konstanten Taktrate ausführen, wobei sich Bewegungsbahnen des ersten Drehtisches und des zweiten Drehtisches an einer Stelle überschneiden, an der die Übergabe eines Werkstückes von einem Haltefutter des ersten Drehtisches an ein Haltefutter des zweiten Drehtisches erfolgt, wobei an diskreten Arbeitspositionen entlang den Bewegungsbahnen des ersten und zweiten Drehtisches Bearbeitungswerkzeuge und Gasbrenner zur Bearbeitung und Heissformgebung der Glasbehältnisse angeordnet sind.

### Figurenübersicht

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden. Es zeigen:
- Fig. 1: den grundsätzlichen Aufbau eine Heißformgebungsvorrichtung gemäß der vorliegenden Erfindung in einer schematischen seitlichen Schnittansicht;
- Fig. 2: in einer schematischen Draufsicht Teile der Heißformgebungsvorrichtung gemäß der Fig. 1;
- Fig. 3a: und 3b in einem Teilschnitt und einer schematischen Draufsicht die Lagerung des Drehtisches der Heißformgebungsvorrichtung gemäß der Fig. 1 an einer drehfesten Säule (beispielhaft für eine Muttermaschine);
- Fig. 4: in einer schematischen Perspektivansicht einen Drehtisch mit einer schematischen Darstellung von Kühlmittelkanälen gemäß der vorliegenden Erfindung;
- Fig. 5: in einem schematischen Teilschnitt die Anordnung von Kühlmittel-Verteilerkanälen und Kühlmittelkanälen in einem Drehtisch gemäß einer Ausführungsform der vorliegenden Erfindung,
- Fig. 6a und 6b: in einer schematischen Draufsicht und Seitenansicht den Drehtisch einer Heißformgebungsvorrichtung gemäß der vorliegenden Erfindung, der aus einem unteren Hauptkörper und einem oberen Hauptkörper zusammengesetzt ist;
- Fig. 7a und 7b: in einer schematischen Draufsicht mit Teilschnitt und Seitenansicht die Ausbildung von Kühlmittel-Verteilerkanälen und die Verbindung mit dieser Kühlmittel-Verteilerkanäle mit Kühlmittelkanälen bei einem Drehtisch gemäß einer weiteren Ausführungsform der vorliegenden Erfindung, und
- Fig. 8: in einer schematischen Darstellung einen Regelkreis zur Temperaturregelung in einer Heißformgebungsvorrichtung gemäß der vorliegenden Erfindung.

In den Figuren bezeichnen identische Bezugszeichen identische oder im Wesentlichen gleichwirkende Elemente oder Elementgruppen.

### Ausführliche Beschreibung von bevorzugten Ausführungsbeispielen

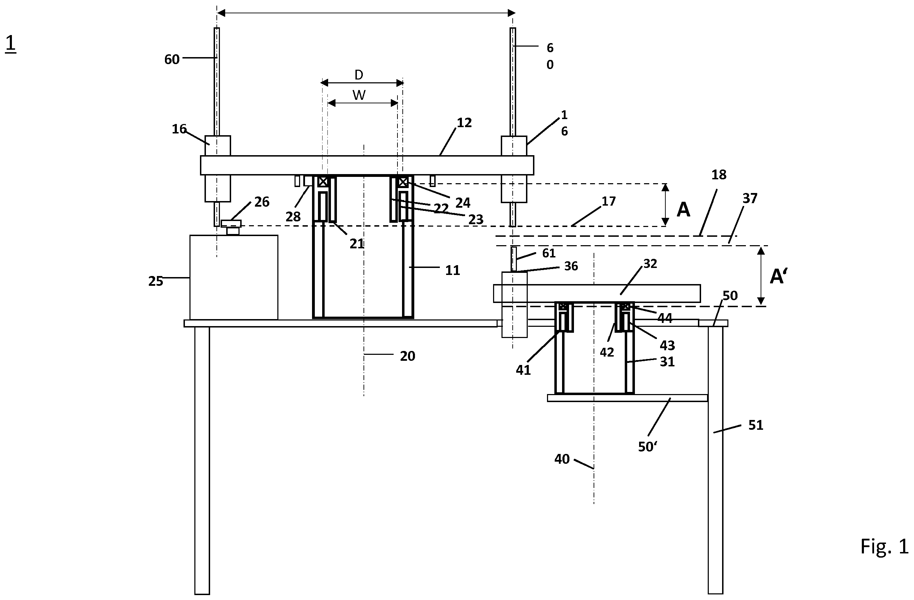

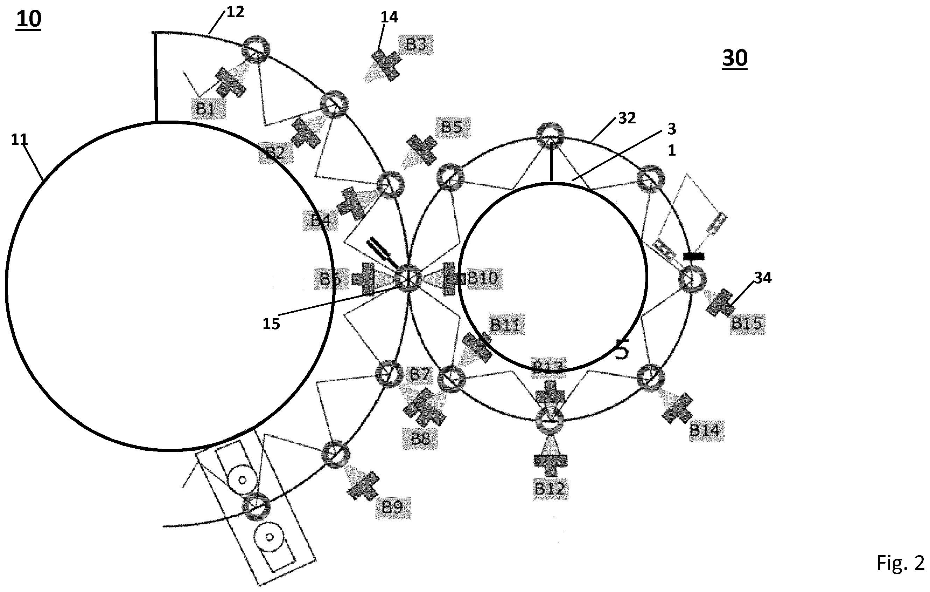

Die in den Figuren 1 und 2 gezeigte Heißformgebungsvorrichtung 1 dient der Herstellung von Glasbehältnissen aus einem Glasrohr 60, das von oben her vertikal ausgerichtet zugeführt wird. Die herzustellenden Glasbehältnisse, beispielsweise Glasfläschchen (Vials), Karpulen oder Spritzenkörper, dienen der Aufbewahrung von pharmazeutischen Wirkstoffen. Die Heißformgebungsvorrichtung 1 umfasst dabei eine sog. Muttermaschine 10, die insbesondere einer Heissumformung des zugeführten Glasrohrs 60 an einem dem späteren Boden oder offenen Ende des Glasbehältnisses gegenüberliegenden Ende dient, und eine sog. Bodenmaschine 30, die der Muttermaschine 10 nachgeordnet ist und insbesondere der Formung des Bodens oder des offenen Endes des Glasbehältnisses dient. Das zugeführte Glasrohr 60 bzw. die halbfertigen Zwischenprodukte werden in Haltefuttern 16, 36 auf einer geeigneten Bearbeitungshöhe gehalten, die über den Umfang der Drehtische 12, 32 verteilt angeordnet sind. An den Drehtischen 12, 32 sind Haltefutter 16, 36 zum Halten von Glasrohren 60 bzw. halbfertigen Zwischenprodukten 61 vorgesehen. Die Drehtische 12, 32 sind an den zugeordneten Säulen 11, 31 drehbeweglich gelagert. Die Drehtische 12, 32 werden schrittweise um die zugeordneten Säulen 11, 31 gedreht bzw. geschwenkt. Dabei werden die an den Haltefuttern 16, 36 gehaltenen Glasrohre 60 bzw. halbfertigen Zwischenprodukte 61 schrittweise an verschiedenen Bearbeitungsstationen B1 ... B15 vorbeigeführt, an denen während einer jeweiligen Stillstandszeit die Bearbeitung und Heissumformung zu den Glasbehältnissen erfolgt. Diese Bearbeitungsstationen B1 ... B15 umfassen insbesondere Bearbeitungswerkzeuge 26 zur Bearbeitung und Heizeinrichtungen, beispielsweise Gasbrenner 14, 34. Die dargestellte Anzahl von Bearbeitungsstationen B1 ... B15 ist nur beispielhaft und soll die Erfindung nicht beschränken. Wie in der Fig. 2 gezeigt, überschneiden sich die Bewegungsbahnen des ersten Drehtisches 12 und des zweiten Drehtisches 32 an einer Übergabeposition 15, an der die Übergabe eines Werkstückes 60 von einem Haltefutter 16 des ersten Drehtisches 12 an ein Haltefutter 36 des zweiten Drehtisches 32 erfolgt. Weitere Einzelheiten eines solchen Aufbaus können beispielsweise der EP 2 818 454 A1 oder der PCT/EP2017/077114 mit Anmeldetag vom 24.10.2017 der Anmelderin entnommen werden, deren Inhalte hiermit im Wege der Bezugnahme ausdrücklich mit aufgenommen seien.

Die beiden Säulen 11, 31 sind feststehend bzw. drehstarr auf der Oberseite einer Arbeitsplatte 50, 50` angeordnet, die auf einem Gestell 51 aufgeständert ist. Die unteren Enden der Säulen 11, 31 stehen nicht über die Unterseite der jeweils zugeordneten Arbeitsplatte 50, 50` vor.

Innerhalb der Säulen 11, 31 sind Direktantriebe 21, 41 angeordnet, welche die Drehbewegung der Säulen 11, 31 antreiben. Genauer gesagt sind die Direktantriebe 21, 41 jeweils bevorzugt im Bereich des oberen Endes der jeweiligen Säule 11, 31 angeordnet, Bei der dargestellten Ausführungsform ist der Direktantrieb als Torquemotor 21, 41 mit einer hohen Polpaaranzahl von beispielsweise zumindest zwanzig Polpaaren, bevorzugter von zumindest dreißig Polpaaren ausgebildet. Gemäß der Fig. 1 umfassen die beiden Torquemotoren 21, 41 jeweils einen innenlaufenden Rotor 22, 42, der als zylindrischer oder polyedrischer Fortsatz ausgebildet ist, der senkrecht von einer Unterseite des jeweiligen Drehtisches 12, 32 vorsteht und in den oberen Bereich der zugeordneten Säule 11, 31 hineinragt. Dem Rotor 22, 42 liegt ein zugeordneter Stator 23, 43 unmittelbar und unter Ausbildung eines schmalen Luftspalts gegenüber. Der Stator 23, 43 ist im Bereich des oberen Endes der jeweiligen Säule 11, 31 angeordnet und bevorzugt umlaufend in einer Umfangsaussparung (nicht gezeigt) im oberen Bereich der zugeordneten Säule 11, 31 angeordnet. Unter geringem Abstand oberhalb des jeweiligen Stators 23, 43 sitzt ein Drehlager 24, 44 zur Drehlagerung des Drehtisches 12, 32 an der zugeordneten Säule 11, 31.

Weil der jeweilige Rotor 22, 42 direkt am zugeordneten Drehtisch 12, 32 angebracht ist, wird das Drehmoment nur über wenige Komponenten mit wenig bewegter Masse und maximaler Steifigkeit der Konstruktion übertragen, was erfindungsgemäß sehr hohe Taktraten ermöglicht.

In einem Einführbereich der Muttermaschine 10 werden die Glasrohre 60 zunächst vertikal von oben in die Haltefutter 16 eingeführt und dann auf einem geeigneten Höhenniveau von den Haltefuttern 16 geklemmt, sodass das untere Ende des jeweiligen Glasrohrs 60 auf einer Arbeitsebene 17 angeordnet ist, auf der entlang der Bewegungsbahn des ersten Drehtisches 12 diverse Bearbeitungsstationen B1 ... B9 verteilt angeordnet sind (in der Fig. 2 ist genauer gesagt nur ein Teil dieser Bearbeitungsstationen dargestellt).

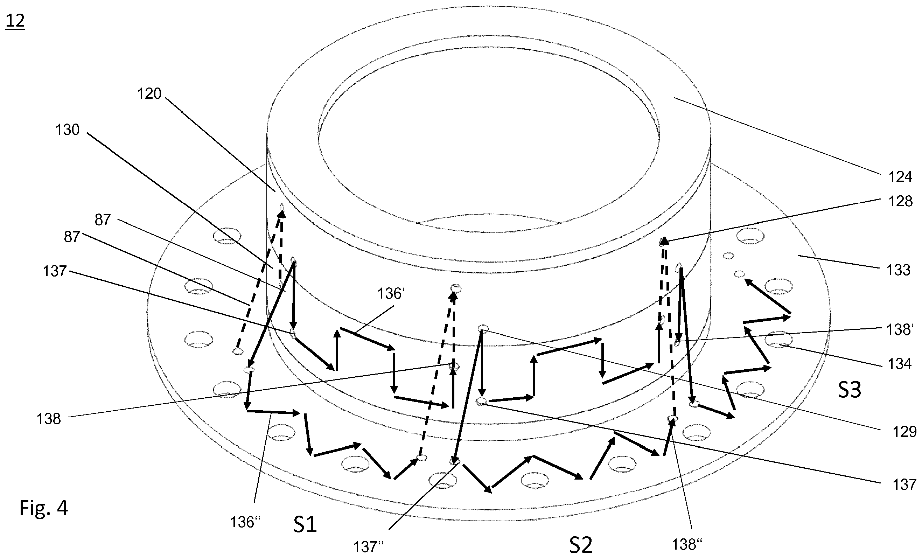

Im Falle der Herstellung von Glasfläschchen (Vials) sind die Glasrohrabschnitte 60 an der Übergabeposition 15 (vgl. Fig. 4) bereits zu gebrauchsfertigen Befüllungsöffnungen mit einem verengten Halsabschnitt und einem verbreiterten Schulterabschnitt umgeformt. Anschließend werden diese Glasrohrabschnitte 60 an der Übergabeposition 15 an die nachgeordnete Bodenmaschine 30 übergeben, in der die weitere Formung der Böden der Glasfläschchen an den weiteren Bearbeitungsstationen B10 ... B 15 erfolgt.

Wie man der Fig. 1 entnehmen kann, sind die Drehlager 24, 44 unter einem geringen oder verschwindenden Abstand A, A' zu der Arbeitsebene 17, 38 zwischen Glasrohr 60 bzw. dem halbfertigen Zwischenprodukt 61 nach Abtrennung von dem Glasrohr 60 und einem Bearbeitungswerkzeug 26 oder aber auf der Trennebene 18 zwischen Glasrohr 60 und davon abgetrenntem halbfertigem Zwischenprodukt 61 angeordnet, was in Verbindung mit der vergleichsweise hohen Steifigkeit des Aufbaus eine hohe Bearbeitungspräzision ermöglicht. Zweckmäßig ist der vorgenannte Abstand A, A' von der Größenordnung einer axialen Länge eines herzustellenden Glasbehältnisses, bevorzugt kleiner als diese axiale Länge. Der geringe Abstand A, A' verhindert zusätzliche Positionierfehler durch winkelige Achsabweichungen zwischen Glasrohr 60 und Werkzeug 26 oder zwischen Glasrohr 60 und halbfertigem Zwischenprodukt 61.

Wie in der Fig. 1 gezeigt, ist auf der Unterseite des ersten Drehtisches 12 ein Sensor 28 zur Bestimmung einer Drehstellung des ersten Drehtisches 12 angeordnet. Ein entsprechender Sensor (nicht gezeigt) kann auch auf der Unterseite des zweiten Drehtisches 32 zur Bestimmung einer Drehstellung des zweiten Drehtisches 32 angeordnet sein. So kann im Bereich des jeweiligen Drehlagers 24, 44 die Winkelbewegung des jeweiligen Drehtisches 12, 32 hochauflösend gemessen werden.

Im Gegensatz zum Stand der Technik ist mit obiger Antriebstechnik die Frequenz der Schwenkung von einer Position zur nächsten nicht aufgrund einer großen zu rotierenden Masse (Getriebe, Säule und Drehtisch) und der daraus folgenden mechanischen Belastung des Getriebes (Beschleunigen und Bremsen zur Positionierung) limitiert. Getriebe, die ein Spiel zwischen den Bauteilen (z.B. Zahnräder oder mechanische Kurven und Rollen) bedingen, sind erfindungsgemäß im Antriebsstrang nicht notwendig, was zu einer längeren Lebensdauer der Drehlagerung aufgrund einer geringeren Belastung führt und auch die Winkelpositioniergenauigkeit parallel zum Arbeitstisch verbessert. Weil der Wirkungsort der Werkzeuge am Glasrohr oder am halbfertigen Zwischenprodukt auf einem relativ großen Durchmesser liegt (Aufgrund vieler Spannfutter), aber der Durchmesser der Drehlager bei dem erfindungsgemäßen Antriebskonzept relativ groß gewählt werden kann, multiplizieren sich Fehler im Gegensatz zum Stand der Technik nicht weiter, was eine höhere Qualität des Endprodukts bedingt.

Die Lagerung des Direktantriebsmotors kann in die Säule mit vergleichsweise großem Durchmesser integriert werden. Weil das integrierte Lager oberhalb des Arbeitstisches angebracht ist, ist der Höhenunterschied zwischen der Lagerung und dem Eingriffspunkt der Werkzeuge bzw. der Übergabe des halbfertigen Zwischenprodukts von der Muttermaschine zur Bodenmaschine gering oder gar verschwindend, was in einer höheren Steifigkeit der Antriebsanordnung und einer höheren Präzision bei der Bearbeitung oder Heissformgebung resultiert. Wie nachfolgend näher ausgeführt, können erfindungsgemäß die Bereiche der Lagerung und des Antriebsmotors gekühlt werden.

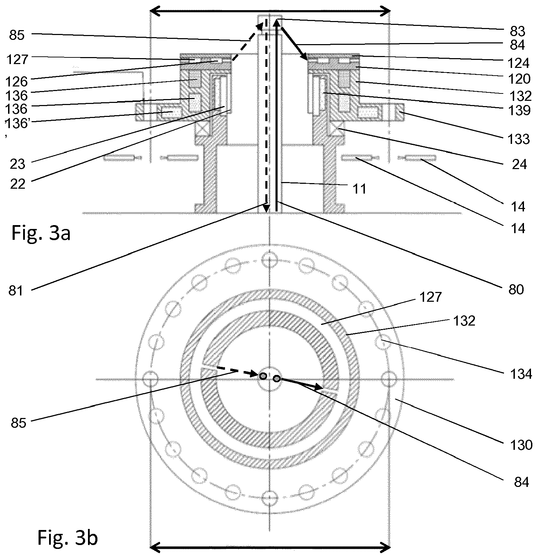

Die Fig. 3 zeigt in einem Teilschnitt und in einer Draufsicht für eine Muttermaschine die Lagerung des Drehtisches 12 gemäß der Fig. 1 an einer drehfesten Säule 11. Grundsätzlich kann eine vergleichbare Lagerung auch für eine Bodenmaschine realisiert sein.

Gemäß dem oberen Bildteil der Fig. 3 ist der Drehtisch aus einem oberen Hauptkörper 120 und einem unteren Hauptkörper 130 zusammengesetzt, die drehstarr miteinander verbunden sind, beispielsweise miteinander verschraubt sind, die jedoch grundsätzlich auch einstückig miteinander ausgebildet sein können, beispielsweise hergestellt durch ein adaptives Fertigungsverfahren.

Der untere Hauptkörper 130 ist übersichtlicher in der Fig. 4 dargestellt und umfasst einen zylindrischen Bereich 132, der an der zugeordneten Säule gelagert ist, und am unteren Ende einen tellerartigen Bereich 133, in dem unter gleichmäßigen Winkelabständen zueinander die Haltefutter in Ausnehmungen 134 befestigt sind, welche das zu verarbeitende Werkstück halten.

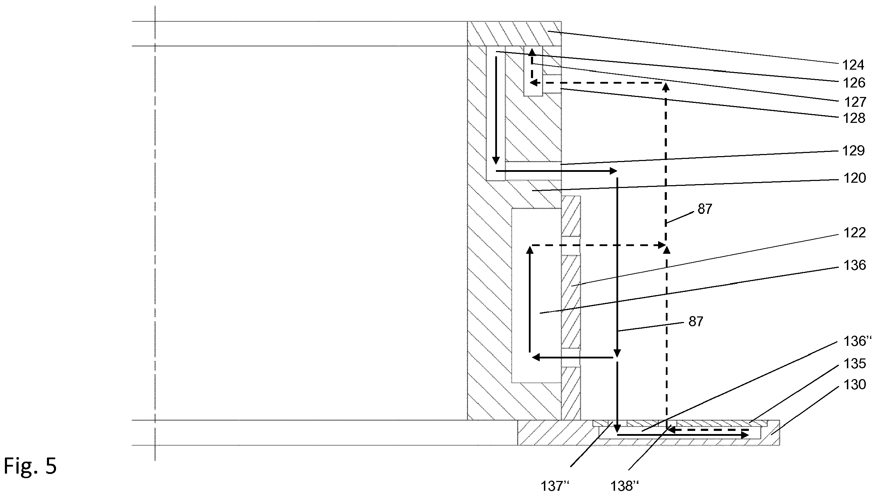

In der Hülse 132 sind Kühlmittelkanäle 136` ausgebildet, durch die zur Kühlung des unteren Hauptkörpers 130 ein Kühlmittel strömt, bevorzugt eine Kühlflüssigkeit. Die Kühlmittelmittelkanäle 136` in dem unteren Hauptkörper 130 erstrecken sich in Umfangsrichtung und sind mäanderförmig ausgebildet, wodurch die thermischen Verhältnisse weiter über die gesamte Hülse 132 vergleichmäßigt werden können. Weiter sind in dem tellerartigen Bereich 133 Kühlmittelmittelkanäle 136"ausgebildet, die ebenfalls einen mäanderförmigen Verlauf haben, wodurch die thermischen Verhältnisse auch in dem tellerartigen Bereich 133 und somit in unmittelbarer Nähe zu den Haltefuttern (nicht gezeigt) vergleichmäßigt werden können. Wie in der Fig. 4 gezeigt, ist der untere Hauptkörper 130 in mehrere Teilabschnitte S1, S2, S3, ... unterteilt, in den jeweils ein Kühlmittelkanal 136`, 136" mit mäanderförmigem Verlauf ausgebildet ist. Die Kühlmittelkanäle 136', 136" der Teilabschnitte S sind parallel geschaltet und sind zu diesem Zweck über Verbindungsleitungen 87 mit einem gemeinsamen Zulauf-Verteilerkanal 126 und einem gemeinsamen Ablauf-Verteilerkanal 127 verbunden, die gemäß der Fig. 3a in dem oberen Hauptkörper 120 ausgebildet sind und die nachfolgend eingehender anhand der Fig. 5 beschrieben werden.

Wie in der Fig. 4 gezeigt, sind an mehreren Positionen an der Hülse 132 Einlässe 137` und Auslässe 138` vorgesehen, die über die Verbindungsleitungen 87 mit Auslässen 129 bzw. Einlässen 128 des oberen Hauptkörpers 120 flüssigkeitsdicht verbunden sind, über die ein Kühlmittel, insbesondere eine Kühlflüssigkeit, von dem oberen Hauptkörper 120 her in die Kühlmittelkanäle 136', 136" des unteren Hauptkörpers 130 einströmt oder zu diesem hin aus den Kühlmittelkanälen 136', 136" zurückströmt, wie nachfolgend ausgeführt. Durch die Parallelschaltung der Kühlmittelkanäle 136', 136" der Teilabschnitte S des unteren Hauptkörpers 130 werden die thermischen Verhältnisse im unteren Hauptkörper 130 auch in dessen Umfangsrichtung vergleichmäßigt.

Allgemein kann der untere Hauptkörper 130 zur Bildung von horizontal verlaufenden und/oder vertikal verlaufenden Kühlkanälen in mehrere Bauteile unterteilt sein. In jedem Bauteil kann dann die Leitungskontour der Kühlkanäle individuell eingearbeitet werden, um für geeignete thermische Verhältnisse zu sorgen. Hierfür werden mäanderförmig verlaufende Leitungskontouren bevorzugt

Wie man der Fig. 4 entnehmen kann, erstrecken sich die Kühlmittelkanäle 136" in dem tellerartigen Bereich 133 bis in Abschnitte zwischen benachbarten Ausnehmungen 134 hinein, um gezielt auch diese Bereiche in unmittelbarer Nähe der Haltefutter zu kühlen.

Die Fig. 5 zeigt weitere Einzelheiten der Verteilerkanäle 126, 127, die am oberen Ende des oberen Hauptkörpers 120 ausgebildet sind. Genauer gesagt sind am oberen Ende des oberen Hauptkörpers 120 ein innerer Verteilerkanal 126 mit einem kleineren Durchmesser und ein äußerer Verteilerkanal 127 mit einem größeren Durchmesser jeweils als umlaufende Nuten ausgebildet. Dabei ist der innere Verteilerkanal 126 tiefer ausgebildet als der äußere Verteilerkanal 127. Von der Außenseite des oberen Hauptkörpers 120 erstrecken sich radiale Bohrungen 128, 129 bis zum jeweiligen Verteilerkanal 126, 127, um als Einlass bzw. Auslass der Verteilerkanäle 126, 127 zu dienen. Entsprechend der jeweiligen Tiefe der Verteilerkanäle 126, 127 sind die radialen Bohrungen 128, 129 in Achsrichtung des oberen Hauptkörpers 120 versetzt ausgebildet. Der Auslass 129 des inneren Verteilerkanals 126 ist über eine Verbindungsleitung 87 mit einem Einlass 137" des Kühlmittelkanals 136" verbunden. Der Einlass 128 des äußeren Verteilerkanals 127 ist über eine Verbindungsleitung 87 mit einem Auslass 138" des Kühlmittelkanals 136" verbunden. Diese Verbindungen sind entsprechend für sämtliche Teilabschnitte S (vgl. Fig. 4) des Drehtisches ausgebildet, um eine Parallelschaltung dieser Teilabschnitte zu realisieren.

Gemäß der Fig. 5 ist bei diesem Ausführungsbeispiel im unteren Bereich des zylindrischen Abschnitts des oberen Hauptkörpers 120 weiterhin zumindest ein Kühlmittelkanal 136` ausgebildet, der bevorzugt gleichfalls den in der Fig. 4 gezeigten mäanderförmigen Verlauf hat. Bevorzugt ist auch dieser untere Bereich in mehrere Teilabschnitte in Umfangsrichtung unterteilt, die über Verzweigungen der Verbindungsleitungen 87 entsprechend mit Kühlmittel versorgt werden, insbesondere mit einer Kühlflüssigkeit.

Die Fig. 5 zeigt weiter ein bevorzugtes Prinzip zur Ausbildung der Kühlmittelkanäle in Bereichen eines Drehtisches. Am oberen Ende des oberen Hauptkörpers sind die Verteilerkanäle 126, 127 durch eine ringförmige Abdeckung abgedichtet abgedeckt. Demnach ist die Formkontour der Verteilerkanäle 126, 127 in einem ersten Teil, nämlich am oberen Ende des oberen Hauptkörpers 120, ausgebildet, wobei ein zweites Teil oder mehrere zweite Teile, nämlich die ringförmige obere Abdeckung 124, eine Abdeckung zum Abdecken der Formkontur der Verteilerkanäle 126, 127 bildet. In entsprechender Weise sind die Kühlmittelkanäle 136` auf dem Außenumfang am unteren Ende des oberen Hauptkörpers 120 ausgebildet, wobei ein zweites Teil oder mehrere zweite Teile, nämlich die zylindrische Abdeckung 122, eine Abdeckung zum Abdecken der Formkontur der Kühlmittelkanäle 136` bildet. Die beiden Teile sind miteinander abgedichtet verbunden.

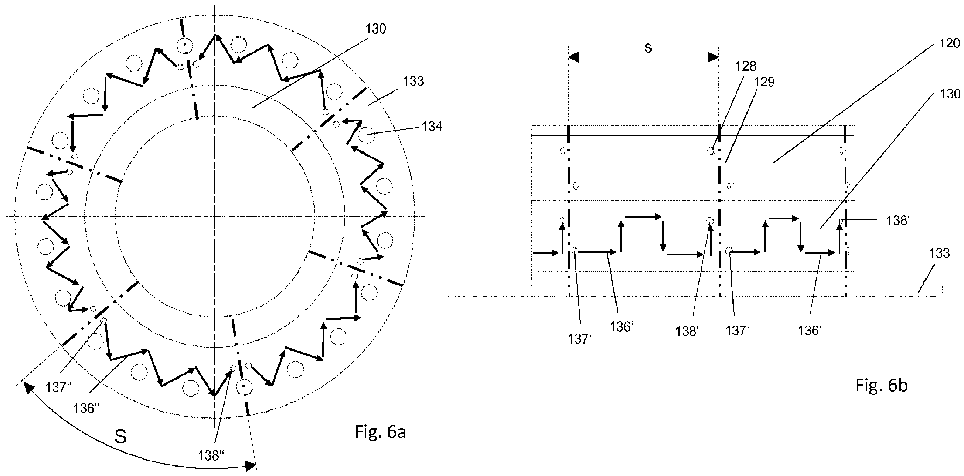

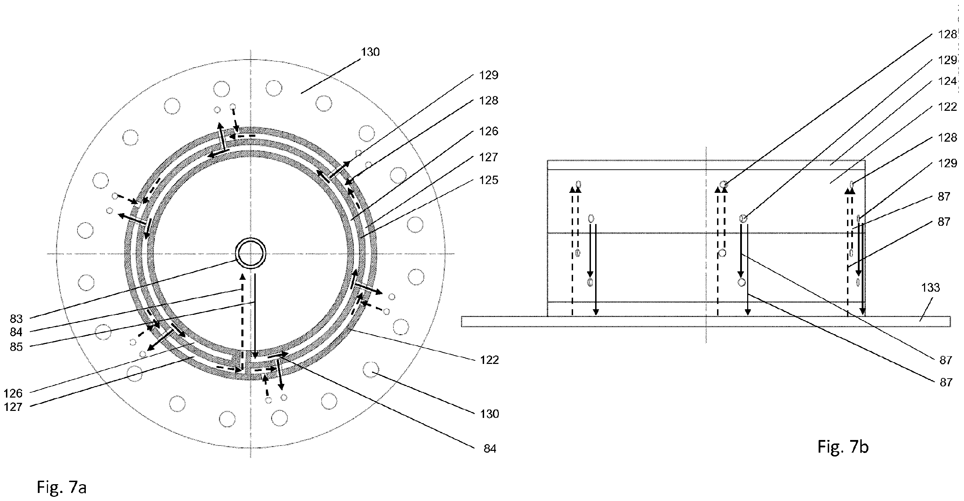

Die Figuren 6a und 6b zeigen nochmals den Drehtisch gemäß der Fig. 4 in einer schematischen Draufsicht und einer schematischen Seitenansicht, wobei die Strömungsrichtungen in den Kühlmittelkanälen 136`, 136" durch Pfeile angegeben sind. Die Pfeile in der Fig. 7a geben die Strömungsverhältnisse in den Verteilerkanälen 126, 127 des oberen Hauptkörpers an. Die Pfeile in der Fig. 7b geben schematisch die Strömungsrichtungen in den Verbindungsleitungen 87 an, welche die Verteilerkanäle im oberen Hauptkörper 120 mit den Kühlmittelkanälen im zylindrischen Abschnitt des unteren Hauptkörpers 130 bzw. im Drehkranz 133 des unteren Hauptkörpers 130 verbinden.

Wie man der Fig. 3a entnehmen kann, ist in dem unteren Hauptkörper 130 ein Kühlmittelkanal 139 in unmittelbarer Nähe zum Stator 23 des Antriebsmotors angeordnet, um eine optimale Kühlung des Stators 23 zu ermöglichen. Auch dieser Kühlmittelkanal 139 kann einen mäanderförmigen Verlauf haben, insbesondere in vertikaler Richtung. Wie man der Fig. 3a entnehmen kann, sind in dem vertikalen Abschnitt des unteren Hauptkörpers 130 weitere Kühlmittelkanäle 136, 136` vorgesehen, die einer Kühlung des vertikalen Abschnitts des unteren Hauptkörpers 130 dienen, insbesondere auch des Lagers 24. Auch diese Kühlmittelkanäle 136, 136` können einen mäanderförmigen Verlauf haben, insbesondere in vertikaler Richtung. Wie man der Fig. 3a entnehmen kann, sind in dem horizontalen Abschnitt 133 des unteren Hauptkörpers 130 weitere Kühlmittelkanäle 136" vorgesehen, die einer Kühlung des tellerartigen Bereichs 133 des Drehtisches mit den dort vorgesehenen Ausnehmungen 134 für die Haltefutter dienen. Auch diese Kühlmittelkanäle 136" können einen mäanderförmigen Verlauf haben, insbesondere in horizontaler Richtung. Insgesamt wird auf diese Weise für sehr konstante thermische Bedingungen in diesem dimensionskritischen Abschnitt des Drehtisches 12 gesorgt.

Die Versorgung des Drehtisches 12 mit Kühlmittel ist schematisch in den Figuren 3a und 3b gezeigt. In dem hohlen Innenraum der Säule 11 sind ortsfest eine Kühlmittel-Versorgungsleitung 80 und eine Kühlmittel-Abführungsleitung 81 verlegt. Am oberen Ende der Säule 11 ist ein Verbindungsabschnitt (Drehverteilerkopf) 83 vorgesehen, an den die Verbindungsschläuche 84, 85 zur Verbindung mit Kühlmittel-Verteilerkanälen 126, 127 flüssigkeitsdicht angekoppelt sind, die der weiteren Versorgung der Kühlmittelkanäle 136, 136', 136" sowie 139 dienen. Der Verbindungsabschnitt (Drehverteilerkopf) 83 ist dabei so ausgelegt, dass die Verbindungsschläuche 84, 85 der Drehbewegung des Drehtisches 12 auch bei hohen Taktraten problemlos folgen können und die Verbindung flüssigkeitsdicht ist.

Nachfolgend wird die Kühlung im Bereich des Drehtisches 12, seiner Lagerung und seines Antriebs näher anhand der Fig. 3a beschrieben.

Stator 23 und Rotor 24 des Antriebsmotors sind innerhalb des unteren Drehtischs angeordnet. Der Stator 23 ist von einem Kühlmittelkanal 139 umgeben. Die Abwärme des Antriebsmotors kann somit wirkungsvoll aus diesem Bereich abgeführt werden; auch die Lager 24 sind in diesem Bereich angeordnet, sodass auch für die Lagerung des Drehtisches 12 an der Säule 11 stabile thermische Verhältnisse gewährleistet werden können. Der obere Hauptkörper 120 versorgt über eine kreissegmentartige Einspeisung und eine entsprechende Abführung die Kühlkreise 136, 136` und 136" im unteren Hauptkörper 130 mit Kühlmittel, das in geeigneter Weise auf die über den Umfang verteilten, einzelnen Kühlkreise 136, 136` und 136" im unteren Hauptkörper 130 verteilt wird. Insgesamt wird somit im Bereich des Drehtisches 12 für stabile thermische Verhältnisse gesorgt. Dies gilt auch für den Fall einer Änderung der Prozessparameter bei der Heissumformung der Glasrohre bzw. halbfertigen Zwischenprodukte.

Die Kühlung des Drehtischs 12 (vgl. Fig. 1) sorgt für gleichmäßige thermische Verhältnisse, sodass die Haltefutter 16 in der Arbeitsebene 17 nur geringen Positionsschwankungen aufgrund von thermischer Ausdehnung unterliegen. Somit können in der eigentlichen Arbeitsebene 17 stabile thermische Bedingungen vorherrschen, sodass Dimensionsschwankungen, Lageabweichungen etc. aufgrund eines schwankenden Wärmeeintrags etc. erfindungsgemäß wirkungsvoll verhindert werden können. Somit können die Glasbehältnisse mit gleichbleibend hoher Qualität hergestellt werden. Die Heißformgebungsvorrichtung 1 kann dabei bereits rasch nach einem Hochfahren oder einem Stillstand wieder zur Herstellung von Glasbehältnissen genutzt werden.

Die drehfeste Säule 11 und der kompakte Antriebsaufbau mit Kühlung gemäß der vorliegenden Erfindung ermöglichen insbesondere auch, dass die Gasbrenner 14 im Gegensatz zum Stand der Technik nicht radial nach innen gerichtet sondern radial nach außen gerichtet betrieben werden können, wie schematisch in der Fig. 3a dargestellt. Damit kann der Wärmeeintrag in die Säule 11 signifikant reduziert werden, was sehr vorteilhaft zu gleichbleibenden thermischen Verhältnissen im Bereich des Drehtisches 12, einschließlich seiner Lagerung und seines Antriebs, beiträgt. Denkbar sind auch beide Orientierungen der Gasbrenner 14, wie in der Fig. 3a dargestellt, womit die Temperaturbedingungen im Bereich der Heissumformung noch gleichmäßiger und effizienter vorgegeben werden können.

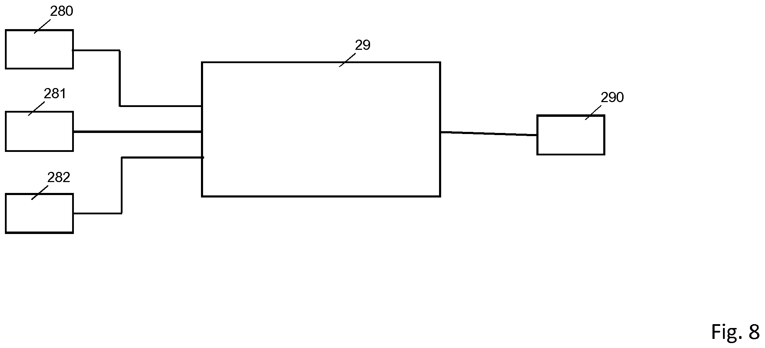

Wie in der Fig. 8 gezeigt, kann zur weiteren Vergleichmäßigung der thermischen Verhältnisse eine Temperaturregelung im Bereich des Drehtisches 12, einschließlich seiner Lagerung und seines Antriebs, eingesetzt werden. Hierzu sind in der Heißformgebungsvorrichtung an geeigneter Position mehrere Temperatursensoren 280-282 angeordnet, beispielsweise zum Erfassen einer Temperatur des Drehtisches oder des den Drehtisch durchströmenden Kühlmittels oder der Lager oder der Säule. Die Messwerte der Temperatursensoren 280-282 werden an einen Temperatur-Regelkreis 29 übergeben, der dann ein Stellglied 290, beispielsweise ein Stellventil. verstellt, um die Kühlwirkung des Kühlmittels geeignet zu regeln und so für noch stabilere Temperaturverhältnisse zu sorgen. Beispielsweise kann das Stellglied 290 die Strömungsrate des Kühlmittels geeignet variieren, beispielsweise durch Verändern eines Strömungsquerschnitts, eines Volumenstroms oder durch Verändern der Vorlauftemperatur.

Wie dem Fachmann beim Studium der vorstehenden Beschreibung des Kühlungskonzepts gemäß der vorliegenden Beschreibung ohne weiteres ersichtlich sein wird, dienen die Begriffe "oben" und "unten" in der vorstehenden Beschreibung lediglich der Beschreibung der gegenseitigen Lagebeziehung von Unterabschnitten eines Drehtisches, ohne dass damit eine obere oder untere Position des Drehtisches in einem tatsächlichen Betrieb gemeint ist. Vielmehr kann der Drehtisch im Vergleich zur vorstehenden Beschreibung auch anders herum gelagert sein, also mit dem unteren Abschnitt oben und dem oberen Abschnitt unten. So brauchen die Haltefutter insbesondere nicht unbedingt an einem unteren Abschnitt des Drehtisches befestigt sein, sondern können auch an einem oberen oder beliebigen mittleren Abschnitt des Drehtisches befestigt sein. Ferner brauchen die vorstehend beschriebenen Kühlmittel-Verteilerkanäle nicht notwendigerweise in einem oberen Abschnitt eines Drehtisches vorgesehen sein, sondern können auch in einem unteren oder beliebigen mittleren Abschnitt des Drehtisches vorgesehen sein.

Wenngleich vorstehend anhand der Figuren 1 und 2 beschrieben wurde, dass die Drehtische an einer feststehenden Säule drehbeweglich gelagert sind, können die Drehtische selbstverständlich auch wie bei einer herkömmlichen Rundläufer-Maschine an rotierenden Drehsäulen befestigt sein.

### Bezugszeichenliste

- 1: Heißformgebungsvorrichtung

- 10: Muttermaschine
- 11: Säule
- 12: Drehtisch
- 120: oberer Hauptkörper von Drehtisch 12
- 122: Seitenwand
- 124: obere Abdeckung
- 125: Trennwand
- 126: innerer Kühlmittelkanal
- 127: äußerer Kühlmittelkanal
- 128: Einlass
- 129: Auslass

- 130: unterer Hauptkörper von Drehtisch 12
- 132: zylinderförmiger Bereich vom Drehtisch (Hülse)
- 133: tellerartiger Bereich vom Drehtisch (Halteflansch)
- 134: Ausnehmung für Haltefutter
- 135: Abdeckung radialer Kühlkanal

- 136, 136', 136": Kühlmittelkanal
- 137, 137`, 137": Einlass
- 138, 138', 138`: Auslass
- 139: Kühlmittelkanal Stator

- 14: Gasbrenner
- 140: Halterung für Gasbrenner 14

- 15: Übergabebereich
- 16: Haltefutter
- 17: Arbeitsebene
- 18: Trennebene
- 20: Drehachse
- 21: Torquemotor
- 22: Rotor
- 23: Stator
- 24: Lager
- 25: Halte- und Positionierungsblock
- 26: Werkzeug

- 28: Sensor zur Bestimmung einer Drehstellung
- 280, 281, 282: Temperatursensor
- 29: Regelkreis
- 290: Stellglied

- 30: Bodenmaschine
- 31: Säule
- 32: Drehtisch
- 34: Gasbrenner

- 36: Haltefutter
- 37: Arbeitsebene

- 40: Drehachse
- 41: Torquemotor
- 42: Rotor
- 43: Stator
- 44: Lager

- 50: Arbeitstisch
- 50`: zusätzliche Halteplatte
- 51: Gestell

- 60: Glasrohr / Werkstück
- 61: Zwischenprodukt / Werkstück

- 80: Kühlmittel-Versorgungsleitung
- 81: Kühlmittel-Abführungsleitung
- 83: Verbindungsabschnitt zur Kühlmittelversorgung (rotierend) Drehdurchführung
- 84: Verbindungsschlauch mit Kühlmittel-Einlass
- 85: Verbindungsschlauch zu Kühlmittel-Auslass

- 87: Verbindungsschlauch

- A, A': Abstand Drehlager zu Arbeitsebene
- B1 ... B15: Bearbeitungsstationen
- D: Lagerdurchmesser
- W: Wirkdurchmesser

## Patentansprüche

1. Heißformgebungsvorrichtung zur Herstellung von Glasbehältnissen aus einem Glasrohr, mit
einem drehbeweglich gelagerten Drehtisch (12, 32) und
einem zugeordneten Antriebsmotor (21, 41) zum Antreiben des Drehtisches (12, 32), wobei
über den Umfang des Drehtisches (12, 32) mehrere Haltefutter (16, 36) zum Halten von Werkstücken (60, 61) verteilt angeordnet sind,
**dadurch gekennzeichnet, dass** in dem Drehtisch (12, 32) ein Kühlmittelkanal (126, 127, 136) ausgebildet ist, der flüssigkeitsdicht ist und der zum Kühlen des Drehtisches (12, 32) von einem Kühlmittel durchströmbar ist.

2. Heißformgebungsvorrichtung nach Anspruch 1, wobei der Kühlmittelkanal (136) zumindest abschnittsweise mäanderförmig ausgebildet ist, so dass das Kühlmittel den Kühlmittelkanal (136) mäanderförmig durchströmen kann, vorzugsweise wobei die Mäander des Kühlmittelkanals (136) sich radial bis zwischen die Haltefutter (16, 36) erstrecken.

3. Heißformgebungsvorrichtung nach einem der vorhergehenden Ansprüche, wobei entlang des Umfangs des Drehtisches mehrere Teilabschnitte (S) mit Kühlmittelkanälen (136) ausgebildet sind, welche mit einem gemeinsamen Zulauf-Verteilerkanal (126) und einem gemeinsamen Ablauf-Verteilerkanal (127) flüssigkeitsdicht verbunden und parallelgeschaltet sind,
vorzugsweise wobei entlang des Umfangs des Drehtisches zwei bis acht Teilabschnitte (S) mit Kühlmittelkanälen (136) ausgebildet sind, welche mit einem gemeinsamen Zulauf-Verteilerkanal (126) und einem gemeinsamen Ablauf-Verteilerkanal (127) flüssigkeitsdicht verbunden und parallelgeschaltet sind, und/oder wobei die Verteilerkanäle für das Kühlmittel als umfängliche Kanäle (126, 127) in einem gemeinsamen Hauptkörper (120, 130) ausgeführt sind, die über eine Trennwand (125) voneinander getrennt sind.

4. Heißformgebungsvorrichtung nach Anspruch 3, wobei einer der Verteilerkanäle (126, 127) einen kleineren Durchmesser als der andere Verteilerkanal (127, 126) aufweist, wobei der innere Verteilerkanal (126, 127) in Achsrichtung des Hauptkörpers betrachtet tiefer in den Hauptkörper (120) eingearbeitet ist als der äußere Verteilerkanal (127, 126),
vorzugsweise wobei Anschlüsse (87) zur Versorgung der Kühlmittelkanäle (136) der Teilabschnitte (S) mit Kühlmittel über radiale Bohrungen (128, 129) mit den Verteilerkanälen (126, 127) flüssigkeitsdicht verbunden sind, wobei die radialen Bohrungen (128, 129) in Achsrichtung des Hauptkörpers (120, 130) versetzt sind.

5. Heißformgebungsvorrichtung nach einem der vorhergehenden Ansprüche, wobei die Kühlmittelkanäle (136, 126, 127) durch mindestens zwei Teile (120, 122, 130, 135) ausgebildet sind, die miteinander flüssigkeitsdicht abgedichtet verbunden sind,
vorzugweise wobei in einem ersten Teil (120, 130) eine Formkontur der Kühlmittelkanäle (136) eingeformt oder diese durch mehrere erste Teile ausgebildet ist und wobei ein zweites Teil oder mehrere zweite Teile (122, 135) eine Abdeckung (124, 135) zum Abdecken der Formkontur der Kühlmittelkanäle bildet, wobei das erste und zweite Teil oder die ersten und zweiten Teile miteinander flüssigkeitsdicht abgedichtet verbunden sind, um die Kühlmittelkanäle auszubilden.

6. Heißformgebungsvorrichtung nach einem der vorhergehenden Ansprüche, wobei der Drehtisch (12, 32) an einem Träger (11, 31) drehbeweglich gelagert ist, der feststehend auf einem Arbeitstisch (50, 50') der Heißformgebungsvorrichtung angeordnet ist und sich senkrecht zu dem Arbeitstisch (50, 50') erstreckt, wobei oberhalb des Drehtisches (12, 32) an dem Träger (11, 31) ein Kühlmittel-Verteiler (83) vorgesehen ist, der eine ortsfeste Versorgungs- und Abführungsleitung (80, 81) zur Versorgung und Abführung des Kühlmittels über Verbindungsleitungen (84, 85) mit dem drehbeweglich gelagerten Drehtisch (12, 32) flüssigkeitsdicht verbindet, vorzugsweise wobei der Träger als Säule (11, 31) mit einem kreisrunden Querschnitt ausgebildet ist,
und/oder wobei der Drehtisch (12, 32) an einer rotierenden Drehsäule gelagert ist, die auf einem Arbeitstisch (50, 50') der Heißformgebungsvorrichtung drehbeweglich gelagert ist und von einem zugeordneten Antriebsmotor um ihre Achse gedreht wird.

7. Heißformgebungsvorrichtung nach einem der vorhergehenden Ansprüche, wobei entlang des Umfangs des Drehtisches mehrere Teilabschnitte (S) mit oberen Kühlmittelkanälen (136'), die in einem oberen Bereich des Drehtisches (12, 32) verlaufen, und mit unteren Kühlmittelkanälen (136") ausgebildet sind, die in einem unteren Bereich des Drehtisches (12, 32) verlaufen, wobei Einlässe (128, 137) und Auslässe (129, 138) der Teilabschnitte (S) über Verbindungsleitungen (87) so miteinander flüssigkeitsdicht verbunden sind, dass die Teilabschnitte (S) parallel geschaltet sind,
vorzugweise wobei entlang des Umfangs des Drehtisches zwei bis acht Teilabschnitte (S) ausgebildet sind.

8. Heißformgebungsvorrichtung nach einem der vorhergehenden Ansprüche, wobei der Drehtisch (12, 32) zweiteilig ausgebildet ist, mit einem ersten Hauptkörper (120), der insbesondere einen oberen Bereich des Drehtisches ausbildet, und einem zweiten Hauptkörper (130), der insbesondere einen unteren Bereich des Drehtisches ausbildet, wobei die Hauptkörper (120, 130) drehstarr miteinander verbunden sind,
vorzugsweise wobei die Haltefutter (16, 36) am zweiten Hauptkörper (130) angeordnet sind.

9. Heißformgebungsvorrichtung nach Anspruch 8 und einem der Ansprüche 3 oder 4, wobei die Verteilerkanäle (126, 127) für das Kühlmittel als umfängliche Kanäle in dem ersten Hauptkörper (120) ausgebildet sind,
vorzugsweise wobei in dem zweiten Hauptkörper (130) ein sich in Umfangsrichtung erstreckender Kühlmittelkanal (136') mit mäanderförmigem Verlauf ausgebildet ist.

10. Heißformgebungsvorrichtung nach Anspruch 9, wobei der zweite Hauptkörper (130) einen vertikalen Abschnitt (132) und einen horizontalen Abschnitt (133) aufweist, wobei der horizontale Abschnitt (133) als Drehkranz ausgebildet ist und an diesem die Haltefutter (16, 36) angeordnet sind, wobei zumindest in dem horizontalen Abschnitt (133) oder sowohl in dem horizontalen Abschnitt (133) als auch in dem vertikalen Abschnitt (132) ein sich in Umfangsrichtung erstreckender Kühlmittelkanal (136', 136") mit mäanderförmigem Verlauf ausgebildet ist.

11. Heißformgebungsvorrichtung nach einem der Ansprüche 8 bis 10, wobei an dem Drehtisch ein Antriebsmotor (21, 41) angeordnet ist, der von einem umfänglichen Kühlmittelkanal (136') umgeben ist, sodass Wärme im Bereich des Antriebsmotors über das den umfänglichen Kühlmittelkanal (136') durchströmende Kühlmittel abgeführt werden kann,
vorzugsweise wobei an einem Ende eines Trägers oder einer Säule (11, 31) ein Stator (23, 43) des Antriebsmotors (21, 41) so aufgenommen ist, dass Wärme, welche den Stator erwärmt, über einen zwischen Stator und Säule integrierten Kühlkanal (139) abgeführt werden kann.

12. Heißformgebungsvorrichtung nach Anspruch 11, wobei der Antriebsmotor als Direktantrieb (21, 42) ausgebildet ist, sodass der jeweilige Drehtisch (12, 32) mit dem zugeordneten Träger oder mit der zugeordneten Säule (11, 31) direkt und ohne Zwischenschaltung eines Getriebes verbunden ist, wobei der jeweilige Direktantrieb bevorzugt einen Torquemotor (21, 42) mit einer hohen Polpaaranzahl umfasst, vorzugsweise wobei die Polpaaranzahl größer oder gleich zweiundzwanzig ist.

13. Heißformgebungsvorrichtung nach einem der vorhergehenden Ansprüche, weiterhin umfassend ein Drehlager (24, 44) zur drehbeweglichen Lagerung des Drehtisches, wobei das Drehlager in unmittelbarer Nähe eines Abschnitts des Drehtisches angeordnet ist, der von dem Kühlmittel durchströmt ist.

14. Heißformgebungsvorrichtung nach einem der vorhergehenden Ansprüche, weiterhin umfassend zumindest einen Temperatursensor (280, 282) zum Erfassen einer Temperatur des Drehtisches oder des den Drehtisch durchströmenden Kühlmittels, und eine zugeordnete Regelschaltung (29), um die Temperatur des Drehtisches oder des den Drehtisch durchströmenden Kühlmittels durch Verstellen eines Stellglieds (290) konstant zu halten.

15. Heißformgebungsvorrichtung nach einem der vorhergehenden Ansprüche, mit einem ersten drehbeweglich gelagerten Drehtisch (12) und einem zweiten drehbeweglich gelagerten Drehtisch (32), wobei die Drehtische (12, 32) schrittweise Drehbewegungen um zugeordnete Träger oder Säulen (11, 31) mit einer konstanten Drehzahl ausführen, wobei Bewegungsbahnen des ersten Drehtisches (12) und des zweiten Drehtisches (32) sich an einer Stelle überschneiden, an der die Übergabe eines Werkstückes (60) von einem Haltefutter (16) des ersten Drehtisches (12) an ein Haltefutter (36) des zweiten Drehtisches (32) erfolgt, wobei an diskreten Arbeitspositionen entlang den Bewegungsbahnen des ersten und zweiten Drehtisches (12, 32) Bearbeitungswerkzeuge (26) und Gasbrenner (14, 34) zur Bearbeitung und Heissformgebung der Glasbehältnisse angeordnet sind.

## Claims

1. Hot-forming apparatus for producing glass containers from
a glass tube, having
a rotary table (12, 32) which is supported so as to be rotationally movable, and
an associated drive motor (21, 41) for driving the rotary table (12, 32), wherein
a plurality of retention chucks (16, 36) are arranged in a state distributed over the circumference of the rotary table (12, 32) in order to retain workpieces (60, 61), **characterised in that** in the rotary table (12, 32) there is formed a coolant channel (126, 127, 136) which is fluid-tight and through which a coolant can flow in order to cool the rotary table (12, 32).

2. Hot-forming apparatus according to claim 1, wherein the coolant channel (136) is constructed at least partially in a meandering manner so that the coolant can flow through the coolant channel (36) in a meandering manner,
preferably wherein the meanders of the coolant channel (136) extend radially as far as a location between the retention chucks (16, 36).

3. Hot-forming apparatus according to any one of the preceding claims, wherein along the circumference of the rotary table a plurality of part-portions (S) are formed with coolant channels (136) which are connected to a common supply distribution channel (126) and a common discharge distribution channel (127) in a fluid-tight manner and are connected in parallel,
preferably wherein along the circumference of the rotary table there are formed two to eight part-portions (S) having coolant channels (136) which are connected to a common supply distribution channel (126) and a common discharge distribution channel (127) in a fluid-tight manner and are connected in parallel,
and/or wherein the distribution channels for the coolant are in the form of circumferential channels (126, 127) in a common main body (120, 130) which are separated from each other by means of a partition wall (125).

4. Hot-forming apparatus according to claim 3, wherein one of the distribution channels (126, 127) has a smaller diameter than the other distribution channel (127, 126), wherein the inner distribution channel (126, 127) when viewed in an axial direction of the main body is incorporated more deeply in the main body (120) than the outer distribution channel (127, 126),
preferably wherein connections (87) for supplying the coolant channels (136) of the part-portions (S) with coolant via radial holes (128, 129) are connected to the distribution channels (126, 127) in a fluid-tight manner, wherein the radial holes (128, 129) are offset in the axial direction of the main body (120, 130).

5. Hot-forming apparatus according to any one of the preceding claims, wherein the coolant channels (136, 126, 127) are formed by means of at least two portions (120, 122, 130, 135) which are connected to each other so as to be sealed in a fluid-tight manner
preferably wherein a shaping contour of the coolant channels (136) is formed in a first portion (120, 130) or it is formed by means of a plurality of first portions, and wherein a second portion or a plurality of second portions (122, 135) form(s) a cover (124, 135) for covering the shaping contour of the coolant channels, wherein the first and second portion or the first and second portions are connected to each other so as to be sealed in a fluid-tight manner in order to form the coolant channels.

6. Hot-forming apparatus according to any one of the preceding claims, wherein the rotary table (12, 32) is supported so as to be rotationally movable on a carrier (11, 31) which is arranged in a fixed manner on a working table (50, 50') of the hot-forming apparatus and which extends perpendicularly relative to the working table (50, 50'), wherein above the rotary table (12, 32) on the carrier (11, 31) there is provided a coolant distributor (83) which connects a fixed supply and discharge line (80, 81) for supplying and discharging the coolant via connection lines (84, 85) to the rotary table (12, 32) which is supported so as to be rotationally movable in a fluid-tight manner, preferably wherein the carrier is in the form of a column (11, 31) having a circular cross-section,
and/or wherein the rotary table (12, 32) is supported on a rotating rotary column which is supported so as to be rotationally movable on a working table (50, 50') of the hot-forming apparatus and which is rotated about the axis thereof by means of an associated drive motor.

7. Hot-forming apparatus according to any one of the preceding claims, wherein a plurality of part-portions (S) having upper coolant channels (136') which extend in an upper region of the rotary table (12, 32) and having lower coolant channels (136") which extend in a lower region of the rotary table (12, 32) are formed along the circumference of the rotary table, wherein inlets (128, 137) and outlets (129, 138) of the part-portions (S) are connected to each other in such a fluid-tight manner by means of connection lines (87) that the part-portions (S) are connected in parallel, preferably wherein along the circumference of the rotary table two to eight part-portion (S) are formed.

8. Hot-forming apparatus according to any one of the preceding claims, wherein the rotary table (12, 32) is constructed in two pieces, having a first main body (120) which in particular forms an upper region of the rotary table, and a second main body (130) which in particular forms a lower region of the rotary table, wherein the main bodies (120, 130) are connected to each other in a torsionally rigid manner,
preferably wherein the retention chucks (16, 36) are arranged on the second main body (130).

9. Hot-forming apparatus according to claim 8 and any one of claims 3 or 4, wherein the distribution channels (126, 127) for the coolant are formed as circumferential channels in the first main body (120),
preferably wherein a coolant channel (136') which extends in a circumferential direction with a meandering path is formed in the second main body (130).

10. Hot-forming apparatus according to claim 9, wherein the second main body (130) has a vertical portion (132) and a horizontal portion (133), wherein the horizontal portion (133) is in the form of a slewing ring and the retention chucks (16, 36) are arranged thereon, wherein at least in the horizontal portion (133) or both in the horizontal portion (133) and in the vertical portion (132) a coolant channel (136', 136") which extends in the circumferential direction with a meandering path is formed.

11. Hot-forming apparatus according to any one of claims 8 to 10, wherein on the rotary table there is arranged a drive motor (21, 41) which is surrounded by a circumferential coolant channel (136') so that heat in the region of the drive motor can be discharged via the coolant flowing through the circumferential coolant channel (136'),
preferably wherein at an end of a carrier or a column (11, 31) a stator (23, 43) of the drive motor (21, 41) is received in such a manner that heat which heats the stator can be discharged via a coolant channel (139) which is integrated between the stator and column.

12. Hot-forming apparatus according to claim 11, wherein the drive motor is in the form of a direct drive (21, 42) so that the respective rotary table (12, 32) is connected to the associated carrier or to the associated column (11, 31) directly and without a gear mechanism being interposed, wherein the respective direct drive preferably comprises a torque motor (21, 42) having a high number of pole pairs, preferably wherein the number of pole pairs is greater than or equal to twenty two.

13. Hot-forming apparatus according to any one of the preceding claims, further comprising a rotary bearing (24, 44) for rotationally movable support of the rotary table, wherein the rotary bearing is arranged in the direct vicinity of a portion of the rotary table through which the coolant flows.

14. Hot-forming apparatus according to any one of the preceding claims, further comprising at least one temperature sensor (280, 282) for detecting a temperature of the rotary table or the coolant which flows through the rotary table, and an associated control circuit (29) in order to keep the temperature of the rotary table or the coolant which flows through the rotary table constant by adjusting an actuator (290) .

15. Hot-forming apparatus according to any one of the preceding claims, having a first rotationally movably supported rotary table (12) and a second rotationally movably supported rotary table (32), wherein the rotary tables (12, 32) gradually carry out rotational movements about associated carriers or columns (11, 31) at a constant speed, wherein movement paths of the first rotary table (12) and the second rotary table (32) intersect at a location at which the transfer of a workpiece (60) from a retention chuck (16) of the first rotary table (12) to a retention chuck (36) of the second rotary table (32) is carried out, wherein at discrete working positions along the movement paths of the first and second rotary table (12, 32) processing tools (26) and gas burners (14, 34) are arranged for processing and hot-forming the glass containers.

## Revendications

1. Dispositif de formage à chaud pour la fabrication de récipients en verre à partir d'un tube de verre, avec
une table rotative (12, 32) logée de manière rotative et
un moteur d'entraînement (21, 41) correspondant pour l'entraînement de la table rotative (12, 32), dans lequel
sur la circonférence de la table rotative (12, 32), sont réparties plusieurs pinces (16, 36) pour le maintien de pièces (60, 61),
**caractérisé en ce que**, dans la table rotative (12, 32), est réalisé un canal de fluide de refroidissement (126, 127, 136) qui est étanche aux liquides et qui peut être traversé par un fluide de refroidissement pour le refroidissement de la table rotative (12, 32).

2. Dispositif de formage à chaud selon la revendication 1, dans lequel le canal de fluide de refroidissement (136) présente une forme sinueuse au moins à certains endroits, de sorte que le fluide de refroidissement peut traverser le canal de fluide de refroidissement (136) de manière sinueuse,
de préférence dans lequel les méandres du canal de fluide de refroidissement (136) s'étendent radialement jusque entre les pinces (16, 36).

3. Dispositif de formage à chaud selon l'une des revendications précédentes, dans lequel, le long de la circonférence de la table rotative, sont réalisées plusieurs portions (S) avec des canaux de fluide de refroidissement (136), qui sont reliés, de manière étanche aux liquides, avec un canal de distribution d'alimentation commun (126) et un canal de distribution de sortie (127) et sont branchés parallèlement,
de préférence, dans lequel, le long de la circonférence de la table rotative, sont réalisées deux à huit portions (S) avec des canaux de fluide de refroidissement (136), qui sont reliés, de manière étanche aux liquides, avec un canal de distribution d'alimentation commun (126) et un canal de distribution de sortie (127) et sont branchés parallèlement,
et/ou dans lequel les canaux de distribution pour le fluide de refroidissement sont conçus comme des canaux circonférentiels (126, 127) dans un corps principal commun (120, 130) qui sont séparés entre eux par une cloison (125).

4. Dispositif de formage à chaud selon la revendication 3, dans lequel un des canaux de distribution (126, 127) présente un diamètre inférieur à celui de l'autre canal de distribution (127, 126), dans lequel le canal de distribution interne (126, 127) est réalisé plus profondément, vu dans la direction axiale du corps principal, dans le corps principal (120) que le canal de distribution externe (127, 126),
de préférence dans lequel des raccords (87) pour l'alimentation des canaux de fluide de refroidissement (136) des portions (S) en fluide de refroidissement sont reliés, de manière étanche aux liquides, par l'intermédiaire de perçages radiaux (128, 129), avec les canaux de distribution (126, 127), dans lequel les perçages radiaux (128, 129) sont décalés dans la direction axiale du corps principal (120, 130).

5. Dispositif de formage à chaud selon l'une des revendications précédentes, dans lequel les canaux de fluide de refroidissement (136, 126, 127) sont réalisés à l'aide d'au moins deux parties (120, 122, 130, 135) qui sont reliées entre elles de manière étanche aux liquides,
de préférence dans lequel, dans une première partie (120, 130), un contour des canaux de distribution (136) est moulé ou celui-ci est réalisé à l'aide de plusieurs premières parties et dans lequel une deuxième partie ou plusieurs deuxièmes parties (122, 135) forment un couvercle (124, 135) pour le recouvrement du contour des canaux de fluide de refroidissement, dans lequel les première et deuxième parties ou les premières et deuxièmes parties sont reliées entre elles de manière étanches aux liquides afin de former les canaux de fluide de refroidissement.

6. Dispositif de formage à chaud selon l'une des revendications précédentes, dans lequel la table rotative (12, 32) est logée de manière rotative au niveau d'un support (11, 31), qui est disposé de manière fixe sur une table de travail (50, 50') du dispositif de formage à chaud et qui s'étend perpendiculairement par rapport à la table de travail (50, 50'), dans lequel, au-dessus de la table rotative (12, 32), au niveau du support (11, 31), est prévu un distributeur de fluide de refroidissement (83) qui relie, de manière étanche aux liquides, une conduite d'alimentation d'évacuation fixe (80, 81) pour l'alimentation et l'évacuation du fluide de refroidissement par l'intermédiaire de conduites de liaison (84, 85) avec la table rotative (12, 32) logée de manière rotative,
de préférence dans lequel le support est conçu comme une colonne (11, 31) avec une section circulaire,
et/ou dans lequel la table rotative (12, 32) est logée au niveau d'une colonne rotative qui est logée de manière rotative sur une table de travail (50, 50') du dispositif de formage à chaud et qui est mise en rotation autour de son axe par un moteur d'entraînement correspondant.

7. Dispositif de formage à chaud selon l'une des revendications précédentes, dans lequel, le long de la circonférence de la table rotative, sont réalisées plusieurs portions (S) avec des canaux de fluide de refroidissement supérieurs (136') qui s'étendent dans une zone supérieure de la table rotative (12, 32) et avec des canaux de fluide de refroidissement inférieurs (136") qui s'étendent dans une zone inférieure de la table rotative (12, 32), dans lequel les entrées (128, 137) et les sorties (129, 138) des portions (S) sont reliées entre elles de manière étanche aux liquides par l'intermédiaire de conduites de liaison (87), de sorte que les portions (S) sont branchées parallèlement,
de préférence dans lequel, le long de la circonférence de la table rotative, sont réalisées deux à huit portions (S).

8. Dispositif de formage à chaud selon l'une des revendications précédentes, dans lequel la table rotative (12, 32) est réalisé en deux parties, avec un premier corps principal (120) qui constitue plus particulièrement une zone supérieure de la table rotative, et un deuxième corps principal (130), qui constitue plus particulièrement une zone inférieure de la table rotative, dans lequel les corps principaux (120, 130) sont reliés entre eux de manière solidaire en rotation,
de préférence dans lequel les pinces (16, 36) sont disposées sur le deuxième corps principal (130).

9. Dispositif de formage à chaud selon la revendication 8 et l'une des revendications 3 ou 4, dans lequel les canaux de distribution (126, 127) pour le fluide de refroidissement sont réalisés comme des canaux circonférentiels dans le premier corps principal (120),
de préférence dans lequel, dans le deuxième corps principal (130), est réalisé un canal de fluide de refroidissement (136') s'étendant dans la direction circonférentielle, avec un tracé en méandres.

10. Dispositif de formage à chaud selon la revendication 9, dans lequel le deuxième corps principal (130) comprend une portion verticale (132) et une portion horizontale (133), dans lequel la portion horizontale (133) est conçue comme une couronne rotative et, sur celle-ci sont disposées les pinces (16, 36), dans lequel, au moins dans la portion horizontale (133) ou bien dans la portion horizontale (133) ainsi que dans la portion verticale (132), est réalisé un canal de fluide de refroidissement (136', 136") s'étendant dans la direction circonférentielle, avec un tracé en méandres.

11. Dispositif de formage à chaud selon l'une des revendications 8 à 10, dans lequel, sur la table rotative, est disposé un moteur d'entraînement (21, 41) qui est entouré par un canal de fluide de refroidissement (136') circulaire, de sorte que la chaleur au niveau du moteur d'entraînement peut être évacuée par l'intermédiaire du fluide de refroidissement traversant le canal de fluide de refroidissement circulaire (136'),
de préférence dans lequel, à une extrémité d'un support ou d'une colonne (11, 31), est logé un stator (23, 43) du moteur d'entraînement (21, 41), de sorte que la chaleur dégagée par le stator peut être évacuée par l'intermédiaire d'un canal de refroidissement (139) intégré entre le stator et la colonne.

12. Dispositif de formage à chaud selon la revendication 11, dans lequel le moteur d'entraînement est conçu comme un entraînement direct (21, 42), de sorte que la table rotative (12, 32) correspondante est relié directement avec le support correspondant ou avec la colonne (11, 31) correspondante, sans le branchement d'une transmission, dans lequel l'entraînement direct correspondant comprend e préférence un moteur à couple (21, 42) avec un nombre de paires de pôles élevé, de préférence dans lequel le nombre de paires de pôles est supérieur ou égal à vingt-deux.

13. Dispositif de formage à chaud selon l'une des revendications précédentes, comprenant en outre un palier rotatif (24, 44) pour le logement rotatif de la table rotative, dans lequel le palier rotatif est disposé à proximité immédiate d'une portion de la table rotative qui est traversée par le fluide de refroidissement.

14. Dispositif de formage à chaud selon l'une des revendications précédentes, comprenant en outre au moins un capteur de température (280, 282) pour la mesure d'une température de la table rotative ou du fluide de refroidissement traversant la table rotative, et un circuit de régulation (29) correspondant afin de maintenir constante la température de la table rotative ou du fluide de refroidissement traversant la table rotative par le réglage d'un organe de réglage (290).

15. Dispositif de formage à chaud selon l'une des revendications précédentes, avec une première table rotative (12) logée de manière rotative et une deuxième table rotative (32) logée de manière rotative, dans lequel les tables rotatives (12, 32) effectuent par pas des mouvements de rotation autour des supports ou des colonnes (11, 31) correspondantes avec une vitesse de rotation constante, dans lequel les trajectoires de déplacement de la première table rotative (12) et de la deuxième table rotative (32) se croisent en un endroit auquel a lieu le transfert d'une pièce (60) d'une pince (16) de la première table rotative (12) vers une pince (36) de la deuxième table rotative (32), dans lequel, à des positions de travail discrètes le long des trajectoires de déplacement des première et deuxième tables rotatives (12, 32), sont disposés des outils d'usinage (26) et des brûleurs à gaz (14, 34) pour l'usinage et le formage à chaud des récipients en verre.
